# EUROPÄISCHE PATENTSCHRIFT

(11) **EP 3 200 428 B1**
(45) Veröffentlichungstag und Bekanntmachung des Hinweises auf die Patenterteilung: **25.03.2020**
(21) Anmeldenummer: 16152681.9
(22) Anmeldetag: 26.01.2016
(51) Int. Cl.: H04L 29/08

(54) **COMPUTERIMPLEMENTIERTES VERFAHREN ZUR IMPLEMENTIERUNG EINER V2X-ANWENDUNG**
COMPUTER-IMPLEMENTED METHOD FOR IMPLEMENTING A V2X-APPLICATION
PROCEDE MIS EN OEUVRE PAR UN ORDINATEUR DESTINE A EXECUTER UNE APPLICATION V2X

(43) Veröffentlichungstag der Anmeldung: 02.08.2017
(73) Patentinhaber: dSPACE digital signal processing and control engineering GmbH, 33102 Paderborn (DE)
(72) Erfinder: SCHULTE, Sebastian, 33102 Paderborn (DE); TENGE, Andreas, 32457 Porta Westfalica (DE)

(56) Entgegenhaltungen:
- WO-A2-2015/144887
- US-A1- 2015 286 754
- Joost Van Doorn: "Cooperative Systems Test Case Functions", , 10. Januar 2014 (2014-01-10), Seiten 1-34, XP055289551, Gefunden im Internet: URL:http://www.deserve-project.eu/wp-conte nt/uploads/2013/04/DESERVE-D45.1-Cooperati ve-Systems-Test-Case-Functions-Solution-De signs1.pdf [gefunden am 2016-07-19]

## Beschreibung

Die Erfindung betrifft ein computerimplementiertes Verfahren zur Implementierung einer V2X-Anwendung auf einer Zielhardware mit einem Funkadapter, wobei die V2X-Anwendung mit einer grafischen Modellierungsumgebung in Form eines Blockschaltbildes modelliert wird. Die Erfindung betrifft ferner verschiedene Blöcke zur Verwendung in einer grafischen Modellierungsumgebung, mit denen eine V2X-Anwendung modelliert und implementiert werden kann.

Die Erfindung entstammt dem Umfeld der Steuergeräteentwicklung, sie betrifft hier weniger die hardwaremäßige Entwicklung eines Steuergeräts, sondern vielmehr die Entwicklung und den Test einer im weitesten Sinne regelungstechnischen Funktionalität auf einem Steuergerät. Der Begriff "regelungstechnische Funktionalität" ist nicht eng im systemtheoretischen Sinne zu verstehen, gemeint ist jegliche gezielte Einflussnahme auf einen mit dem Steuergerät verbundenen technischen Prozess. Das kann auch lediglich die Verarbeitung und/oder Fusion von Sensordaten sein, beispielsweise von Umgebungssensoren.

Die damit verbundene Entwicklung durchläuft verschiedene Phasen, die Teil des sogenannten V-Modells sind. Üblicherweise wird die gewünschte regelungstechnische Funktionalität zunächst abstrakt im Rahmen von Offline-Simulationen - keine Verbindung zum realen Prozess, keine Echtzeitanforderung - durch ein mathematisches Modell abgebildet, wobei üblicherweise mit Blockschaltbildern sowohl der regelungs- und steuerungstechnische Aspekt wie auch der zu beeinflussende technisch-physikalische Prozess mathematisch nachgebildet und mit Hilfe von numerischen Verfahren simuliert werden.

In einem weiteren Schritt wird die regelungstechnische Funktionalität in Programmcode umgesetzt und auf einer Zielhardware implementiert, die sich von dem später zum Einsatz kommenden Seriensteuergerät meist erheblich unterscheidet. Die Zielhardware ist üblicherweise leistungsfähiger als Seriensteuergeräte, so dass beim Test der zu implementierenden regelungstechnischen Funktionalität jedenfalls sichergestellt ist, dass die Hardware kein limitierender Faktor im Aufbau ist. Die so instrumentierte Zielhardware wird jedenfalls im Zusammenhang mit dem zu beeinflussenden technischen Prozess getestet. Die Zielhardware muss sich nicht zwingend von der Hardware unterscheiden, auf der die grafische Modellierungsumgebung betrieben wird und/oder mit der die Übersetzung in ein ausführbares V2X-Programm erfolgt; in diesem Fall ist die Übertragung auf die Zielhardware dann denkbar kurz, das Programm muss lediglich geladen und ausgeführt werden. Die Zielhardware kann also auch ein PC sein, auch der PC, auf dem die Modellierungsumgebung ausgeführt und/oder die Übersetzung des Modells/Blockschaltbildes in ein ausführbares Programm erfolgt.

Sobald die Serien-Zielhardware, also das Seriensteuergerät, zur Verfügung steht, wird der zu implementierende Regelungsalgorithmus für diese Zielhardware erzeugt, wobei das Seriensteuergerät dann zunächst nicht im Zusammenhang mit dem echten physikalischen Prozess getestet wird, sondern mit einer simulierten Prozessumgebung im Rahmen eines Hardware-in-the-Loop-Test (HIL-Test). Nach erfolgreich absolviertem HIL-Test wird die Zielhardware in Form des Seriensteuergeräts im echten physikalischen Prozess, vorliegend also im Kraftfahrzeug, getestet, wobei hier ggf. noch Abstimmungen in der Parametrierung erfolgen.

Wichtig für sämtliche Entwicklungsschritte ist, dass der aus dem Blockschaltbild bekannte abstrakte Regelungsvorgang - im zuvor ausgeführten Sinne eine regelungstechnische Funktionalität, die auch in einer Sensordatenauswertung oder Datenfusion bestehen kann - nicht mehr manuell in Programmcode übersetzt wird, sondern dass diese Übertragung durch einen automatisierten Codegenerierungsprozess aus dem Blockschaltbild heraus erfolgt. So werden die fehlerträchtige manuelle Übertragung vermieden und schnelle Testzyklen mit variierender regelungstechnischer Funktionalität ermöglicht. Die Funktionalität der Blockschaltbilder bzw. der Blöcke der Blockschaltbilder selbst kann ganz unterschiedlich implementiert sein. Es ist möglich, dass die Funktionalität eines Blockschaltbildes intern mit weiteren Blockschaltbildern und Blöcken elementarerer Funktionalität realisiert ist - in Sub- und Subsub-Blockschaltbildern und Blöcken usw. -, es kann aber auch sein, dass die Funktionalität eines Blockschaltbildes selbst in einer höheren Programmier- bzw. Beschreibungssprache hinterlegt ist; darauf kommt es im Einzelnen nicht an.

Mit den heute gängigen grafischen Modellierungs- und Simulationsumgebungen lassen sich durch Verwendung der zur Verfügung stehenden Elementaroperationen (Grundrechenarten, Differential- und Integraloperationen, Bitbeeinflussung, Look-Up-Tables etc.) praktisch beliebige Funktionalitäten nachbilden, wie beispielsweise auch die Buskommunikation zwischen Steuergeräten oder eine Sensordatenauswertung und -fusion. Auch kann in Blöcken Programmcode hinterlegt werden, beispielsweise C/C++ oder C#-Code. Beispiele für Entwicklungsumgebungen, die auf Blockschaltbildern basieren, sind Simulink (The MathWorks), ConfigurationDesk (dSPACE), ADTF (Automotive Data and Time-Triggered Framework, Elektrobit) und RTMaps (Real-Time Multisensor Advanced Prototyping Software, Intempora).

Wenn davon die Rede ist, dass das Blockschaltbild in ein auf der Zielhardware ausführbares V2X-Programm übersetzt wird, dann kann es sich auch um ein solches Programm handeln, das auf der Zielhardware zur Ausführung interpretiert wird; auch dann handelt es sich um ein ausführbares V2X-Programm.

Unter V2X-Technologie wird die Kommunikation eines Fahrzeugs (V = vehicle) mit seiner Umgebung verstanden. Dabei kann es sich um die Kommunikation mit anderen umgebenden Fahrzeugen handeln (V2V) oder um die Kommunikation mit immobilen Kommunikationspartnern (V2Infrastructure). Bei den Fahrzeugen kann es sich beispielsweise um Straßenfahrzeuge handeln, so dass in diesem Fall von Car2X-Anwendungen gesprochen werden kann. Bei der Umgebung kann es sich um gleichartige Fahrzeuge handeln, aber auch um andere Verkehrsteilnehmer (beispielsweise VRU = vulnerable road user wie z. B. Fußgänger, Fahrräder, Rollstühle). Die Umgebung kann aber auch aus anderen Objekten und Kommunikationsmitteln bestehen, z. B. auch Backend-Servern in der Cloud. Ein System, das eine solche Kommunikation nutzt, wird auch als intelligentes Transportsystem (ITS) bezeichnet.

In einem intelligenten Transportsystem kann es vorgesehen sein, dass die am ITS teilnehmenden Verkehrsteilnehmer regelmäßig V2X-Nachrichten mit ihren Telematikdaten aussenden, um die anderen Verkehrsteilnehmer über ihren Status zu informieren. Der Status umfasst bspw. den Ort, die Geschwindigkeit und die Bewegungsrichtung des Verkehrsteilnehmers. Solche Nachrichten werden auch als cooperative awareness messages (CAM) bezeichnet. Ein Verkehrsteilnehmer, der diese CAMs empfängt, kann dann eine Liste führen mit allen Verkehrsteilnehmern, von denen er einen Status erhalten hat. Eine solche Liste wird auch als local dynamic map (LDM) bezeichnet. Da nicht alle Verkehrsteilnehmer CAMs aussenden, wird eine LDM in den meisten Fällen nicht alle Verkehrsteilnehmer enthalten. Durch diese unvollständige Datenbasis können die Verkehrsteilnehmer nicht alle Vorteile des ITS optimal nutzen.

WO 2015/144887 A2 beschreibt ein computerimplementiertes Verfahren zur Implementierung einer V2X-Anwendung auf einer Zielhardware mit einem Funkadapter, wobei die V2X-Anwendung mit einer graphischen Modellierungsumgebung in Form eines Blockschaltbildes modelliert wird.

Vor diesem Hintergrund besteht die Aufgabe der Erfindung darin, ein Verfahren anzugeben, dass es ermöglicht eine vollständigere Datenbasis zu erhalten.

Die Aufgabe wird durch ein Verfahren mit den Merkmalen des Patentanspruchs 1 gelöst. Vorteilhafte Ausgestaltungen der Erfindung sind Gegenstand von abhängigen Unteransprüchen.

Gegenstand ist ein computerimplementiertes Verfahren zur Implementierung einer V2X-Anwendung auf einer Zielhardware mit einem Funkadapter, wobei die V2X-Anwendung mit einer grafischen Modellierungsumgebung in Form eines Blockschaltbildes modelliert wird, das eine LDM- Objektliste, umfasst, in der empfangene Telematikdaten von Umgebungsobjekten erfasst sind, wobei in einer Sensor-Objektliste ermittelte Telematikdaten von Umgebungsobjekten erfasst sind, wobei das Blockschaltbild einen Telematikdatenvergleichsblock umfasst, der durch Vergleich der LDM-Objektliste mit der Sensor-Objektliste Differenz-Umgebungsobjekte ermittelt, die nur in der Sensor-Objektliste erfasst sind, und wobei für wenigstens eines der Differenz-Umgebungsobjekte eine in dem Blockschaltbild eine Vertretungs-V2X-Nachricht mit den Telematikdaten dieses Differenz-Umgebungsobjektes erstellt wird, wobei das Blockschaltbild in ein auf der Zielhardware ausführbares V2X-Programm übersetzt und das V2X-Programm auf die Zielhardware übertragen und dort ausgeführt wird, wobei die Vertretungs-V2X-Nachricht von der Zielhardware über den Funkadapter versendet wird.

Unter "empfangenen Telematikdaten" werden hier Telematikdaten verstanden, die als solche von der Zielhardware empfangen wurden, die also nicht von der Zielhardware aus anderen Daten rekonstruiert wurden. Empfangenen Telematikdaten können bspw. aus V2X-Nachrichten von anderen Verkehrsteilnehmern stammen. Die empfangenen Nachrichten ordnen bestimmten Objekten bestimmte Eigenschaften zu. Dies können zeitunabhängige Eigenschaften wie die Abmessungen sein, aber auch zeitabhängige Eigenschaften wie Ort oder Geschwindigkeit. Für zeitabhängige Eigenschaften können die Nachrichten Zeitstempel enthalten oder den Nachrichten wird beim Empfang ein Zeitstempel zugeordnet.

Unter "ermittelten Telematikdaten" werden hier Telematikdaten verstanden, die von der Zielhardware aus anderen Daten rekonstruiert wurden. Bspw. kann die Zielhardware an einen Sensor angeschlossen sein. Aus den Daten des Sensors können dann Objekte und einige Eigenschaften wie bspw. Ort oder Geschwindigkeit der Objekte bestimmt werden. Ein solcher Sensor kann bspw. ein Radarsensor, ein Ultraschallsensor, ein Videosensor oder ein Lidarsensor sein.

Die Objekte in der LDM-Objektliste und der Sensor-Objektliste können bspw. andere Verkehrsteilnehmer sein. Also PKW, LKW, Motorräder, Fahrräder, Fußgänger, Rollstuhlfahrer, Kinderwagen o.ä.

Bei dem Vergleich können die Eigenschaften der Objekte in den Objektlisten verglichen werden. Bspw. können Ort, Geschwindigkeit, Bewegungsrichtung und Zeitstempel der Eigenschaften verglichen werden und daraus bestimmt werden, ob zwei Objekte in den zwei Listen dasselbe Objekt beschreiben.

Die Zielhardware kann den Funkadapter in einer integrierten hardwaremäßigen Lösung selbst umfassen, die Zielhardware kann aber mit einem Funkadapter auch über eine separat realisierte hardwaremäßige Schnittstelle verbunden sein. Wenn hier davon die Rede ist, dass das mit der grafischen Modellierungsumgebung erstellte Blockschaltbild in ein auf der Zielhardware ausführbares V2X-Programm übersetzt wird, dann kann es sich bei diesem Programm um ein auf einem Prozessor/Mikrocontroller ausführbares Programm handeln, es kann sich aber auch um eine Hardwarebeschreibung handeln, mit der einer Schaltkreisstruktur durch "feste Verdrahtung" die gewünschte Funktionalität aufgegeben wird.

Wenn davon die Rede ist, dass das Blockschaltbild in ein auf der Zielhardware ausführbares V2X-Programm übersetzt wird, dann kann es sich auch um ein solches Programm handeln, das auf der Zielhardware zur Ausführung interpretiert wird; auch dann handelt es sich um ein ausführbares V2X-Programm.

Vorteilhaft ist, dass durch den Vergleich der LDM-Objektliste mit der Sensor-Objektliste Vertretungs-V2X-Nachrichten nur für solche Objekte erstellt werden, die noch nicht in der LDM Objektliste enthalten sind. Für Objekte, die bereits in der LDM-Objektliste enthalten sind, wurden offenbar bereits Telematikdaten verbreitet, daher ist es unnötig, für diese eine Vertretungs-V2X-Nachricht auszusenden.

Weiterhin ist vorteilhaft, dass andere Verkehrsteilnehmer durch die Vertretungs-V2X-Nachricht die Telematikdaten eines Objektes, das offenbar nicht selbst seine Telematikdaten verbreitet, erhalten. Dadurch können die Empfänger der Vertretungs-V2X-Nachricht ihre Liste der Objekte in ihrer LDM-Objektliste um dieses Objekt erweitern. Die Empfänger der Vertretungs-V2X-Nachricht behandeln diese wie eine ganz normale V2X-Nachricht. Falls die Vertretungs-V2X-Nachricht eine CAM ist, wird diese also wie jede andere CAM behandelt. Die Empfänger müssen folglich nicht auf den Empfang der Vertretungs-V2X-Nachricht vorbereitet werden, da die Vertretungs-V2X-Nachricht ihnen als normale V2X-Nachricht erscheint.

Im Ergebnis werden mit diesem Verfahren also die Telematikdaten von Verkehrsteilnehmern, die selbst keine V2X-Nachrichten versenden, über Vertretungs-V2X-Nachrichten verbreitet, die den Empfängern als normale V2X-Nachricht erscheint. Die Verbreitung erfolgt über Verkehrsteilnehmer oder Verkehrsinfrastruktur, die V2X-Nachrichten versenden können und die zuvor aufgezeigte Funktionalität aufweisen. Die Anzahl der Verkehrsteilnehmer, deren Telematikdaten über V2X-Nachrichten verbreitet werden, wird dadurch erhöht und die Leistungsfähigkeit des ITS insgesamt verbessert, da mehr über die Verkehrsteilnehmer bekannt ist.

In einer Ausführungsform wird die Vertretungs-V2X-Nachricht so erstellt, dass sie den Empfängern so erscheint, als sei sie vom Differenz-Umgebungsobjekt selbst gesendet worden. Dazu wird eine Nachricht mit den Daten des Differenz-Umgebungsobjekts zusammengestellt. Bspw. werden die für die V2X-Anwendungen relevanten Daten, wie Geschwindigkeit, Bewegungsrichtung, Position und Fahrzeugklasse, entsprechend an das Differenz-Umgebungsobjekt angepasst. Dazu kann z. B. im Header des GeoNetworking Protokolls anstelle der eigenen Position die Position des Differenz-Umgebungsobjektes angegeben werden. Die Nutzung eines anderen Signaturschlüssels für die Erzeugung der elektronischen Signatur der Nachricht ist rein optional.

Ein Vorteil der Ausführungsform ist, dass die Empfänger der Vertretungs-V2X-Nachricht die enthaltenen Telematikdaten nicht fälschlich dem Versender der Vertretungs-V2X-Nachricht zuordnen. Die Signatur wird typischerweise nur für eine Integritätsprüfung genutzt und daher kann für die Vertretungsnachricht auch der gleiche Signaturschlüssel wie für eigene V2X-Nachrichten verwendet werden.

In einer Weiterbildung umfasst das Blockschaltbild einen Vertretungsnachrichtenblock, der die Vertretungs-V2X-Nachricht erstellt, wobei die Vertretungs-V2X-Nachricht zumindest die Telematikdaten des Differenz-Umgebungsobjektes enthält.

Ein Vorteil der Weiterbildung ist, dass die Formvorschriften für die Erstellung der Vertretungs-V2X-Nachricht von dem Vergleich der Objektlisten entkoppelt werden. Wenn sich die Formvorschriften ändern, bspw. weil das V2X-Programm in einem anderen ITS mit anderen Formvorschriften eingesetzt werden soll, so muss nur der Vertretungsnachrichtenblock ausgetauscht werden. Der Telematikdatenvergleichsblock hingegen kann unverändert gelassen werden.

In einer vorteilhaften Ausgestaltung ist die Zielhardware an wenigstens einen Sensor angeschlossen.

Angeschlossen heißt hier kommunikativ angeschlossen. Die Zielhardware ist also in der Lage, Daten vom Sensor zu empfangen. Diese Daten können Rohdaten sein, also die direkten Messwerte des Sensors, als auch verarbeitete Daten, also Informationen über vom Sensor erkannte Objekte und deren Eigenschaften. Ein Sensor kann auch ein simulierter Sensor sein. In diesem Fall wird keine echte Messung durch einen Sensor durchgeführt, sondern ein Simulator liefert Daten, die denen eines echten Sensors gleichen. Dies kann bspw. bei der Prüfung des modellierten Programms sinnvoll sein, wenn die Zielhardware mittels eines Simulators auf korrekte Funktion geprüft werden soll.

Vorteilhaft an der Ausgestaltung ist, dass die Zielhardware vom Sensor aktuelle Daten erhalten kann und so die Telematikdaten in der Sensor-Objektliste aktualisieren kann. Auf diese Weise stehen in der Sensor-Objektliste aktuelle Daten für den Vergleich mit den Telematikdaten der LDM-Objektliste bereit.

In einer anderen Ausführungsform werden die Telematikdaten mittels wenigstens eines Radar-, Lidar-, Ultraschall- und/oder Video-Sensor ermittelt und von dem V2X-Programm in die Sensor-Objektliste eingetragen.

Vorteilhaft sind Daten von Sensoren, die Ort, Geschwindigkeit, Beschleunigung, Art des Objektes oder eine Kombination dieser Eigenschaften von Objekten erfassen können. Diese Daten können dann in der Sensorobjektliste abgelegt werden und von dort weiterverarbeitet werden.

In einer Weiterbildung umfasst das Blockschaltbild einen Datenfusionsblock, der Telematikdaten verschiedener Sensoren miteinander vergleicht, und nur konsistente Telematikdaten werden von dem V2X-Programm in die Sensor-Objektliste eingetragen.

Unter konsistenten Telematikdaten werden hier Daten verstanden, bei denen die Unterschiede der Daten von mehreren Sensoren für dieselbe Eigenschaft vom selben Objekt unterhalb eines vorgegebenen Schwellwertes liegen. Ein solcher Schwellwert kann bspw. die Messungenauigkeit des Sensors oder ein Vielfaches davon sein.

Vorteilhaft an der Weiterbildung ist, dass die Zuverlässigkeit der Telematikdaten in der Sensor-Objektliste gesteigert werden kann.

In einer weiteren Ausführungsform werden über einen Funkempfänger V2X-Nachrichten mit Telematikdaten anderer Verkehrsteilnehmer empfangen, insbesondere aus Cooperative Awareness Messages (CAM), die Telematikdaten an das V2X-Programm übergeben und von dem V2X-Programm in die LDM-Objektliste eingetragen.

Die V2X-Nachrichten können sowohl über denselben Funkempfänger empfangen werden, über den die Vertretungs-V2X-Nachricht versendet wird, es kann aber auch ein weiterer Funkempfänger für den Empfang der V2X-Nachrichten an die Zielhardware angeschlossen sein. Die V2X-Nachrichten können unverändert vom Funkempfänger an das V2X-Programm übergeben werden, es ist aber auch möglich, dass nur die Telematikdaten an das V2X-Programm übergeben werden. Der Empfang von Telematikdaten anderer Verkehrsteilnehmer kann auch simuliert werden. In dem Fall können die simulierten V2X-Nachrichten oder auch direkt die simulierten Telematikdaten an das V2X-Programm übermittelt werden.

Vorteilhaft an der Ausführungsform ist, dass die Telematikdaten in der LDM-Objektliste durch die empfangenen Telematikdaten aus den V2X-Nachrichten aktualisiert werden. Die V2X-Nachrichten können dem aussendenden Objekt zugeordnet und dessen Telematikdaten in der LDM-Objektliste aktualisiert werden. Auf diese Weise stehen aktuelle Werte für den Vergleich mit den Telematikdaten aus der Sensor-Objektliste bereit.

In einer Ausführungsform ist es bevorzugt, dass die Telematikdaten der Umgebungsobjekte in der LDM-Objektliste als absolute Telematikdaten gespeichert sind.

Als absolute Telematikdaten werden hier Telematikdaten verstanden, die sich auf einen Bezugsrahmen beziehen, der nicht vom Objekt abhängt. Die Daten werden also in Bezug auf einen äußeren Bezugsrahmen angegeben.

Bspw. können Orte in Bezug auf das GPS-Raster und Geschwindigkeiten in Bezug auf die ruhende Erdoberfläche angegeben werden.

Vorteilhaft an der Ausführungsform ist, dass die absoluten Telematikdaten durch den einheitlichen Bezugsrahmen leichter verarbeitet werden können, da nicht zu jedem Objekt auch der Bezugsrahmen bekannt sein muss.

Gemäß einer anderen Weiterbildung sind die Telematikdaten der Umgebungsobjekte in der Sensor-Objektliste als relative Telematikdaten relativ zu Eigenbewegungsdaten des Sensors gespeichert, und aus den relativen Telematikdaten der Umgebungsobjekte in der Sensor-Objektliste und den Eigenbewegungsdaten des Sensors werden absolute Telematikdaten der Umgebungsobjekte bestimmt.

Unter Eigenbewegungsdaten werden hier bspw. Position, Geschwindigkeit und/oder Beschleunigung des Sensors angesehen. Daten von Sensoren werden in den meisten Fällen relativ zum Sensor erfasst. Für eine Vergleichbarkeit der relativen Telematikdaten der Sensor-Objektliste mit den absoluten Telematikdaten der LDM-Objektliste müssen die Telematikdaten in einen einheitlichen Bezugsrahmen überführt werden. Durch eine einfache Addition der Eigenbewegungsdaten und der Sensordaten können die relativen Telematikdaten leicht in absolute Telematikdaten umgewandelt werden und danach mit den absoluten Telematikdaten der LDM-Objektliste verglichen werden. Die Eigenbewegungsdaten können auch aus einer Simulation der Eigenbewegung des Sensors stammen. Dies ist bspw. zu Testzwecken vorteilhaft.

In einer Weiterbildung werden die Eigenbewegungsdaten des Sensors zumindest zum Teil über ein globales Navigationssatellitensystem bestimmt.

Es sind mehrere globale Navigationssatellitensysteme (GNSS) bekannt bspw. GPS, GLONASS, GALILEO oder Beidou. Mit einem GNSS können in vielen Fällen sehr schnell und präzise Position und Geschwindigkeit des Empfängers der Satellitensignale bestimmt werden. Ein GNSS eignet sich daher sehr gut für die Bestimmung der Eigenbewegungsdaten des Sensors. Alternativ oder zusätzlich können weitere Sensoren zur Bestimmung der Eigenbewegungsdaten eingesetzt werden. Beim Einsatz in einem Fahrzeug können bspw. Radsensoren die Geschwindigkeit und/oder Beschleunigung des Fahrzeugs messen. Trägheitssensoren können ebenfalls zur Messung von Beschleunigungen eingesetzt werden.

In einer Ausgestaltung wird die Vertretungs-V2X-Nachricht als eine Cooperative Awareness Message (CAM) erstellt.

Vorteilhaft an der Ausgestaltung ist, dass die Form einer CAM bekannt und normiert ist. Dadurch können die Empfänger der Vertretungs-V2X-Nachricht diese wie eine normale CAM behandeln. Die Empfänger müssen also nicht speziell für den Empfang der Vertretungs-V2X-Nachricht vorbereitet werden, sondern müssen nur die bekannten CAMs verarbeiten können. Die Vertretungs-V2X-Nachricht enthält allerdings nicht wie eine normale CAM die Telematikdaten des aussendenden Verkehrsteilnehmers, sondern die Telematikdaten des Differenz-Umgebungsobjektes. In einer alternativen Ausgestaltung kann anstelle der CAM auch eine Basic Safety Message (BSM) genutzt werden.

In einer Ausgestaltung ist die Zielhardware in einem Fahrzeug untergebracht.

Vorteilhaft an der Ausgestaltung ist, dass ein Fahrzeug typischerweise in Bewegung ist und so an verschiedenen Orte ermittelte Telematikdaten und an verschiedenen Orten empfangene Telematikdaten miteinander vergleichen kann.

In einer anderen Ausgestaltung ist die Zielhardware in stationärer Verkehrsinfrastruktur untergebracht.

Vorteilhaft an der Ausgestaltung ist, dass die stationäre Verkehrsinfrastruktur dauerhaft einen speziellen Bereich bspw. einen Kreuzungsbereich überwachen kann. Für diesen Bereich kann die Verkehrsinfrastruktur Telematikdaten an entfernte Empfänger übermitteln, sodass diese über die Objekte in diesem Bereich informiert sind, bevor sie den Bereich erreichen.

Ein Teilaspekt betrifft auch einen Telematikdatenvergleichsblock zur Implementierung einer V2X-Anwendung mit einer grafischen Modellierungsumgebung in Form eines Blockschaltbildes, wobei in einer LDM-Objektliste die empfangenen Telematikdaten von Umgebungsobjekten erfasst sind, wobei in einer Sensor-Objektliste die ermittelten Telematikdaten von Umgebungsobjekten erfasst sind, wobei der Telematikdatenvergleichsblock durch Vergleich der LDM-Objektliste mit der Sensor-Objektliste Differenz-Umgebungsobjekte ermittelt, die nur in der Sensor-Objektliste erfasst sind.

Über den Telematikdatenvergleichsblock kann innerhalb der Modellierungsumgebung einfach ein Vergleich von Telematikdaten durchgeführt werden, sodass die Modellierung eines Blockschaltbildes vereinfacht wird. Der Block erkennt, welche Objekte in den beiden Objektlisten dasselbe Objekt beschreiben und welche Objekte nur in der Sensor-Objektliste beschrieben werden. Dazu kann der Telematikdatenvergleichsblock bspw. die Eigenschaften der Objekte wie Ort oder Geschwindigkeit miteinander vergleichen und vom selben Objekt ausgehen, wenn die Unterschiede der Eigenschaften unterhalb eines vorgegebenen Schwellwertes liegen. Anders ausgedrückt, kann der Telematikdatenvergleichsblock vom selben Objekt ausgehen, wenn die Eigenschaften der Objekte konsistent sind.

Ein Teilaspekt betrifft auch einen Vertretungsnachrichtenblock zur Implementierung einer V2X-Anwendung mit einer grafischen Modellierungsumgebung in Form eines Blockschaltbildes, wobei der V2X-Vertretungsnachrichtenblock wenigstens eine Vertretungs-V2X-Nachricht mit Telematikdaten eines Differenz-Umgebungsobjektes erstellt.

Mit dem Vertretungsnachrichtenblock lässt sich die Erstellung der Vertretungs-V2X-Nachricht innerhalb der Modellierungsumgebung vereinfachen. Der Vertretungsnachrichtenblock nimmt die Telematikdaten des Differenz-Umgebungsobjektes entgegen und erstellt daraus die Vertretungs-V2X-Nachricht, d. h. er stellt sicher, dass die Protokollanforderungen an eine V2X-Nachricht erfüllt werden. So kann er bspw. einen Absender eintragen oder die Vertretungs-V2X-Nachricht digital signieren.

In einer vorteilhaften Ausgestaltung wird die Vertretungs-V2X-Nachricht vom Vertretungsnachrichtenblock so erstellt, dass die Vertretungs-V2X-Nachricht dem Empfänger so erscheint, als sei sie vom Differenz-Umgebungsobjekt selbst ausgesendet worden.

Dass die Vertretungs-V2X-Nachricht dem Empfänger so erscheint, als sei sie vom Differenz-Umgebungsobjekt selbst ausgesendet worden, lässt sich bspw. erreichen, indem in die Vertretungs-V2X-Nachricht ein anderer Absender eingetragen wird, als in andere von der Zielhardware ausgesendete V2X-Nachrichten. Auch kann die Vertretungs-V2X-Nachricht mit einem anderen Signaturschlüssel unterzeichnet werden als andere von der Zielhardware ausgesendete V2X-Nachrichten.

Ein Vorteil der Ausgestaltung ist, dass die Empfänger der Vertretungs-V2X-Nachricht die enthaltenen Telematikdaten nicht fälschlich dem Versender der Vertretungs-V2X-Nachricht zuordnen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d. h. die Abstände und die laterale und die vertikale Erstreckungen sind nicht maßstäblich und weisen, sofern nicht anders angegeben, auch keine ableitbaren geometrische Relationen zueinander auf. Es versteht sich, dass die in den einzelnen Figuren dargestellten Details auch miteinander kombiniert werden können. Darin zeigt:
- Figur 1: eine schematische Darstellung eines computerimplementierten Verfahrens zur Implementierung einer V2X-Anwendung auf einer Zielhardware mit einem Funkadapter,
- Figur 2: eine weitere schematische Darstellung eines computerimplementierten Verfahrens zur Implementierung einer V2X-Anwendung, wobei ein Vertretungsnachrichtenblock eingesetzt wird,
- Figur 3: eine weitere schematische Darstellung eines computerimplementierten Verfahrens zur Implementierung einer V2X-Anwendung auf einer Zielhardware mit einem Funkadapter, wobei ein Sensor Daten an die V2X-Anwendung liefert,
- Figur 4: eine weitere schematische Darstellung eines computerimplementierten Verfahrens zur Implementierung einer V2X-Anwendung auf einer Zielhardware mit einem Funkadapter, wobei zwei Sensoren Daten an die V2X-Anwendung liefern und
- Figur 5: eine weitere schematische Darstellung eines computerimplementierten Verfahrens zur Implementierung einer V2X-Anwendung auf einer Zielhardware mit einem Funkadapter, wobei die V2X-Anwendung Eigenbewegungsdaten eines Sensors berücksichtigt.

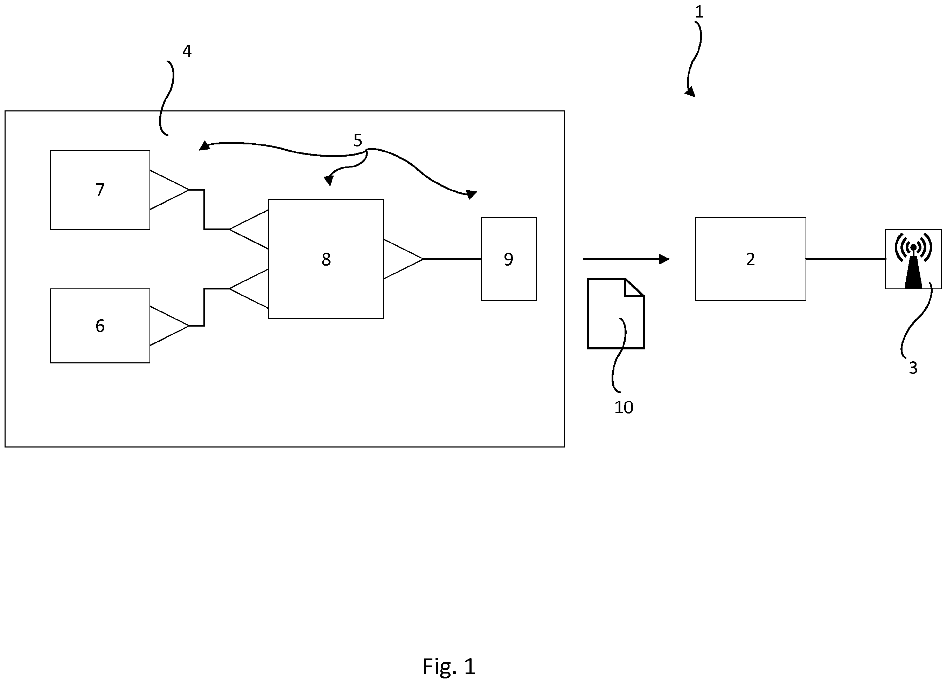

In Fig. 1 ist schematisch zunächst dargestellt der Ablauf des vorgeschlagenen computerimplementierten Verfahrens 1 zur Implementierung einer V2X-Anwendung auf einer Zielhardware 2 mit einem Funkadapter 3, wobei die V2X-Anwendung mit einer grafischen Modellierungsumgebung 4 in Form eines Blockschaltbildes 5 modelliert wird.

Die als Blockschaltbild 5 modellierte V2X-Anwendung greift auf eine LDM-Objektliste 6 und die darin enthaltenen empfangenen Telematikdaten von Umgebungsobjekten zu. Ebenso greift die V2X-Anwendung auf eine Sensor-Objektliste 7 und die darin enthaltenen ermittelten Telematikdaten von Umgebungsobjekten zu. Ein im Blockschaltbild 5 enthaltener Telematikdatenvergleichsblock 8 ermittelt durch Vergleich der in den Listen enthaltenen Telematikdaten Differenzumgebungsobjekte, die nur in der Sensor-Objektliste erfasst sind. Für wenigstens ein Differenzumgebungsobjekt wird in dem Blockschaltbild 5 eine Vertretungs-V2X-Nachricht 9 erstellt.

Das Blockschaltbild 5 und die mit ihm modellierte V2X-Anwendung werden zunächst in ein auf der Zielhardware 2 ausführbares V2X-Programm 10 übersetzt und das V2X-Programm 10 wird dann auf die Zielhardware 2 übertragen und dort ausgeführt. Dies geschieht insgesamt über hier im Einzelnen nicht dargestellte Zwischenstufen: das Blockschaltbild 5 wird analysiert und zunächst in Programmcode übersetzt, wobei der Programmcode dann kompiliert wird, sodass das ausführbare V2X-Programm 10 resultiert. Das auf der Zielhardware 2 ausgeführte V2X-Programm 10 implementiert damit die zuvor mit Hilfe der grafischen Modellierungsumgebung 4 in Form des Blockschaltbildes 5 modellierte Funktionalität der V2X-Anwendung 10.

Die erstellte Vertretungs-V2X-Nachricht 9 wird während der Ausführung des V2X-Programms 10 auf der Zielhardware 2 über den Funkadapter 3 versendet.

Der Funkadapter 3 stellt das technische Medium dar, mit dem entweder mit anderen Fahrzeugen oder mit anderen, festen Kommunikationspartnern kommuniziert wird, wie z. B. Lichtzeichen, Staumeldestationen usw.

Die Zielhardware baut mit den in Funkreichweite befindlichen anderen Kommunikationspartnern ein ad-hoc-Netzwerk auf, das naturgemäß aufgrund der ständig wechselnden Kommunikationspartner hochgradig veränderlich ist.

Die Implementierung einer V2X-Anwendung auf der Zielhardware 2 wird durch den Einsatz eines Telematikdatenvergleichsblockes 8 erleichtert, mit dem das Blockschaltbild 5 - zumindest teilweise - erstellt wird. Der Telematikdatenvergleichsblock 8 enthält eine elementare Objektvergleichsfunktionalität, mit der Telematikdaten einfach verglichen werden können. Dadurch, dass der Telematikdatenvergleichsblock 8 die erforderliche Funktionalität zum Vergleich von Telematikdaten aus den beiden Objektlisten 6, 7 mitbringt, ist es nicht mehr erforderlich, diese Funktionalität im Einzelnen mit Elementaroperationen der Modellierungsumgebung 4 zu modellieren.

Die Objektlisten 6,7 enthalten als Telematikdaten zu jedem Objekt eine Vielzahl von Eigenschaften. Diese Eigenschaften können bspw. Bewegungsdaten wie Ort, Geschwindigkeit oder Bewegungsrichtung sein. Der Telematikdatenvergleichsblock vergleicht die Eigenschaften der Objekte miteinander. Sind mehrere Eigenschaften von einem Objekt aus der Sensor-Objektliste und einem Objekt aus der LDM-Objektliste im Wesentlichen gleich, so werden sie als dasselbe Objekt angesehen. Damit zwei Objekte als dasselbe Objekt angesehen werden, müssen nicht alle Eigenschaften im Wesentlichen gleich sein, es ist jedoch vorteilhaft, wenn mehrere Eigenschaften im Wesentlichen gleich sein müssen, damit die Objekte als dasselbe Objekt angesehen werden. Zwei Eigenschaften werden als im Wesentlichen gleich angesehen, wenn die Differenz der Eigenschaftswerte unterhalb eines vorgegebenen Schwellenwertes liegt. Die Schwellenwerte für die Entscheidung, ob zwei Eigenschaften im Wesentlichen gleich sind, kann während der Modellierung in der Modellierungsumgebung 4 für jede Eigenschaft eingestellt werden. Auch ist es möglich, den Schwellwert von äußeren Bedingungen abhängig zu machen. So können z. B. Witterungsbedingungen Messungen verschlechtern und einen größeren Schwellwert rechtfertigen. Ist in einer Liste bei einem Objekt für eine Eigenschaft kein Eigenschaftswert vorhanden, so wird diese Eigenschaft nicht für den Vergleich des Objektes herangezogen. Findet der Telematikdatenvergleichsblock 8 zu einem Objekt aus der Sensor-Objektliste 7 kein im Wesentlichen gleiches Objekt in der LDM-Objektliste, so gibt er dieses Objekt als Differenz-Umgebungsobjekt aus.

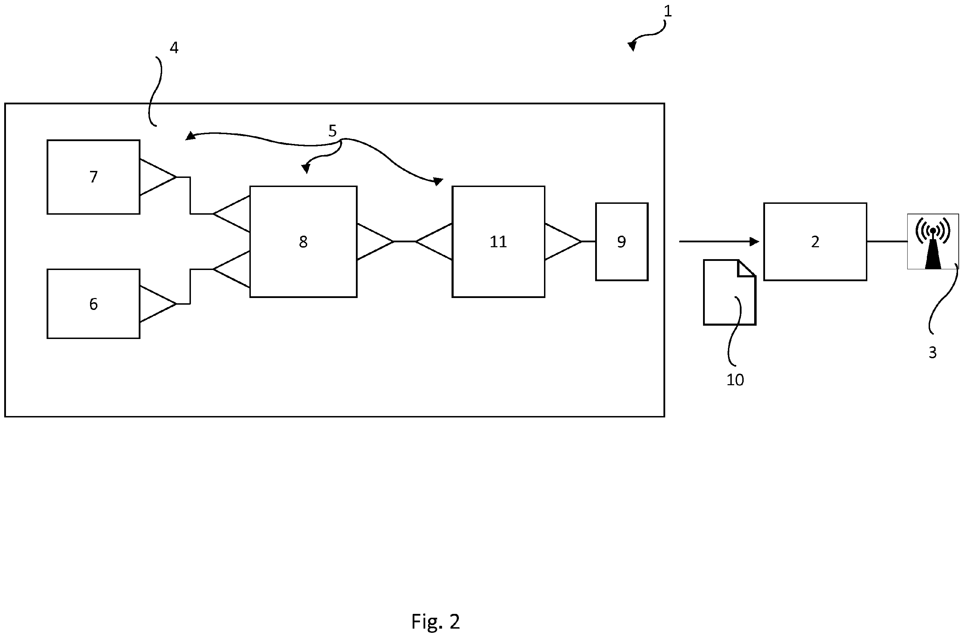

In der Abbildung der Figur 2 ist eine weitere Ausführungsform des Verfahrens 1 dargestellt. Im Folgenden werden nur die Unterschiede zu der Abbildung der Figur 1 erläutert. In dem Blockschaltbild 5 befindet sich ein Vertretungsnachrichtenblock 11. Der Vertretungsnachrichtenblock 11 nimmt vom Telematikdatenvergleichsblock 8 die Telematikdaten eines Differenzumgebungsobjektes entgegen und erstellt aus den Telematikdaten eine Vertretungs-V2X-Nachricht 9.

Die Implementierung einer V2X-Anwendung auf der Zielhardware 2 wird durch den Einsatz eines Vertretungsnachrichtenblocks 11 erleichtert, mit dem das Blockschaltbild 5 - zumindest teilweise - erstellt wird. Der Vertretungsnachrichtenblock 11 enthält die notwendige Funktionalität, um aus den Telematikdaten eines Differenzumgebungsobjektes eine Vertretungs-V2X-Nachricht 9 erstellen zu können. So sind in dem Vertretungsnachrichtenblock 11 die Formvorschriften für V2X-Nachrichten und entsprechende Signaturschlüssel hinterlegt. Dadurch, dass der Vertretungsnachrichtenblock 11 diese Funktionalität mitbringt, ist es nicht mehr erforderlich, diese Funktionalität im Einzelnen mit Elementaroperationen der Modellierungsumgebung 4 zu modellieren.

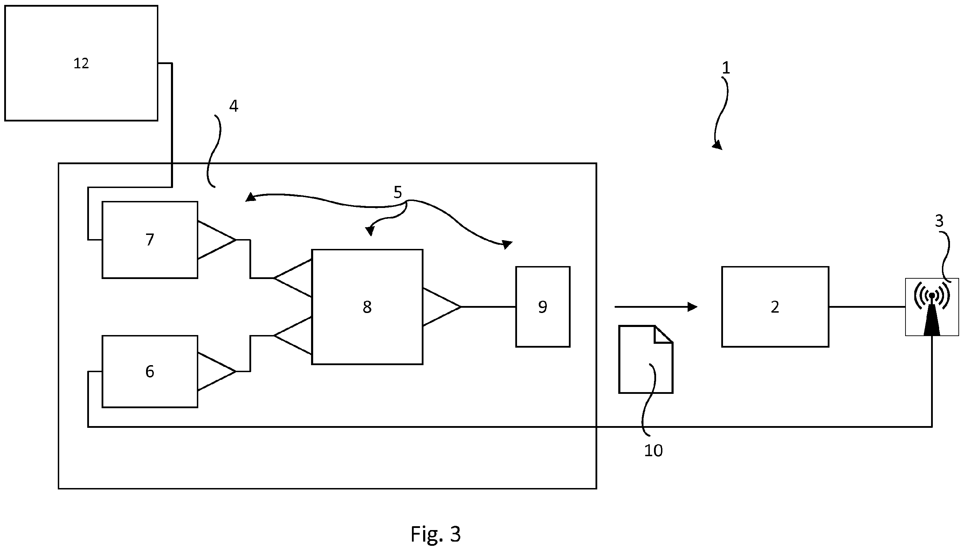

In Figur 3 ist eine weitere Ausführungsform des Verfahrens 1 dargestellt. Im Folgenden werden nur die Unterschiede zu der Figur 1 erläutert. Ein erster Sensor 12 ist kommunikativ an die Sensor-Objektliste 7 gekoppelt. Dargestellt ist hier die kommunikative Verbindung, es versteht sich, dass die Funktion des dargestellten Blockdiagramms 5 auf der Zielhardware 2 ausgeführt wird und die Zielhardware 2 die kommunikative Verbindung zum Sensor 12 herstellt. Dieser erste Sensor 12 kann bspw. ein Radarsensor, ein Ultraschallsensor, ein Videosensor oder ein Lidarsensor sein. Der erste Sensor tastet seine Umgebung ab. Mittels der Sensordaten lassen sich Objekte und deren Eigenschaften in der Umgebung des ersten Sensors 12 identifizieren. Welche Eigenschaften sich identifizieren lassen, hängt vom eingesetzten Sensor ab. Die identifizierten Objekte und ihre Eigenschaften werden dann vom V2X-Programm 10 in der Sensor-Objektliste 7 eingetragen.

Der Funkadapter 3 ist kommunikativ mit der LDM-Objektliste 6 verbunden. Der Funkadapter 3 empfängt V2X-Nachrichten von anderen Verkehrsteilnehmern oder von der Verkehrsinfrastruktur. Die in den empfangenen V2X-Nachrichten enthaltenen Telematikdaten werden von dem V2X-Programm 10 in der LDM-Objektliste 6 abgelegt.

Das V2X-Programm 10 kann über die kommunikativen Verbindungen zum Sensor die Telematikdaten in der Sensor-Objektliste aktualisieren. Durch den Empfang von V2X-Nachrichten anderer Verkehrsteilnehmer kann das V2X-Programm 10 die Telematikdaten in der LDM-Objektliste aktualisieren.

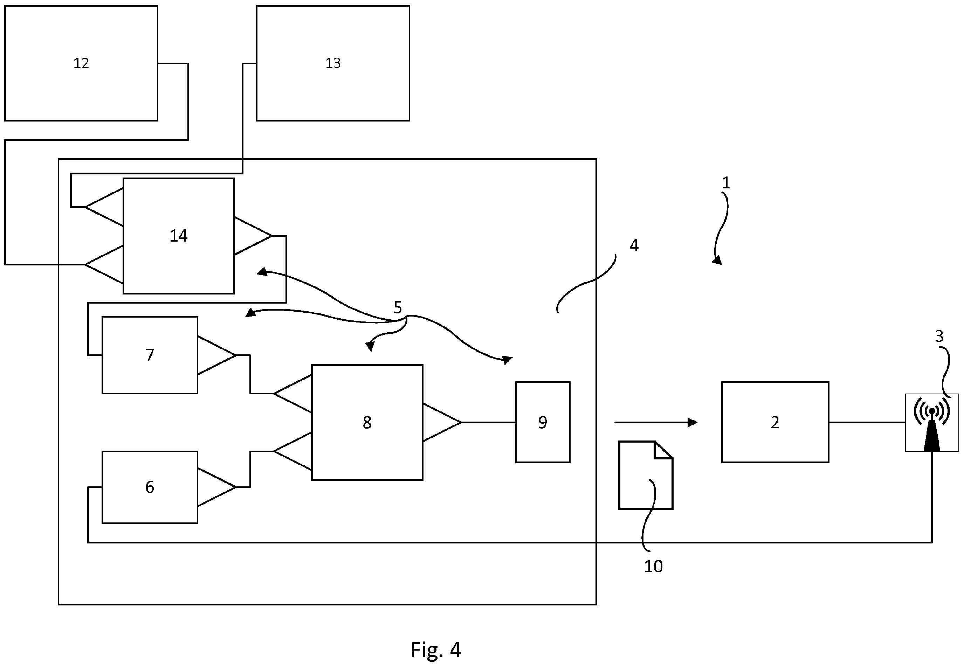

In der Abbildung der Figur 4 ist eine weitere Ausführungsform des Verfahrens 1 dargestellt. Im Folgenden werden nur die Unterschiede zu der Abbildung der Figur 3 erläutert. Zusätzlich zu dem ersten Sensor 12 ist ein zweiter Sensor 13 vorhanden. Die Daten beider Sensoren 12, 13 werden an das V2X-Programm 10 übergeben. In dem V2X-Programm 10 werden die Daten der Sensoren von einem Datenfusionsblock 14 auf Konsistenz überprüft. Bei der Prüfung vergleicht der Datenfusionsblock 14 die mittels der Sensordaten jeweils identifizierten Objekte und deren Eigenschaften miteinander. Wenn die Unterschiede zwischen den Objekten und ihren Eigenschaften kleiner sind als ein vorgegebener Schwellenwert, so werden die Daten als konsistent betrachtet. Danach werden die konsistenten Daten vom Datenfusionsblock 14 in die Sensor-Objektliste 7 eingetragen.

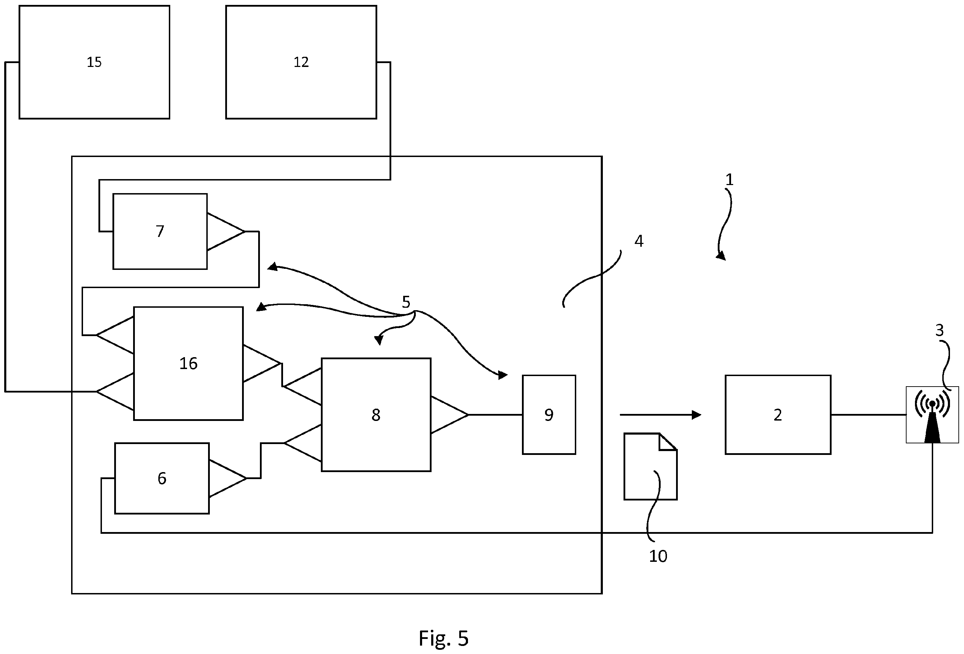

In Figur 5 ist eine weitere Ausführungsform des Verfahrens 1 dargestellt. Im Folgenden werden nur die Unterschiede zu der Figur 3 erläutert. Die vom Sensor 12 in die Sensor-Objektliste 7 übertragenen Telematikdaten sind in diesem Beispiel als relative Daten relativ zum Sensor in der Sensor-Objektliste 7 gespeichert. Die empfangen Telematikdaten in der LDM-Objektliste 6 sind hingegen als absolute Daten, d. h. relativ zur Erdoberfläche, gespeichert. Um die Objektlisten dennoch vergleichen zu können, werden Eigenbewegungsdaten 15 des Sensors vom V2X-Programm 10 geladen. Die Eigenbewegungsdaten 15 geben Position, Geschwindigkeit, Beschleunigung und oder/Ausrichtung des Sensors relativ zur Erdoberfläche an. Durch geeignete Verknüpfung der relativen Telematikdaten aus der Sensor-Objektliste 7 mit den Eigenbewegungsdaten 15 des Sensors kann das V2X-Programm 10 absolute Sensortelematikdaten 16 berechnen. Die absoluten Sensortelematikdaten 16 können dann mit den absoluten Telematikdaten aus der LDM-Objektliste 6 durch den Telematikdatenvergleichsblock 8 verglichen werden.

## Patentansprüche

1. Computerimplementiertes Verfahren (1) zur Implementierung einer V2X-Anwendung auf einer Zielhardware (2) mit einem Funkadapter (3), wobei die V2X-Anwendung mit einer graphischen Modellierungsumgebung (4) in Form eines Blockschaltbildes (5) modelliert wird,
wobei unter V2X-Technologie die Kommunikation eines Fahrzeugs mit seiner Umgebung verstanden wird,
wobei das Blockschaltbild (5) eine LDM-Objektliste (6) umfasst, in der empfangene Telematikdaten von Umgebungsobjekten erfasst sind,
wobei die LDM-Objektliste (6) eine local dynamic map darstellt,
wobei das Blockschaltbild (5) in ein auf der Zielhardware (2) ausführbares V2X-Programm (10) übersetzt und das V2X-Programm (10) auf die Zielhardware (2) übertragen und dort ausgeführt wird,
**dadurch gekennzeichnet, dass**
in einer Sensor-Objektliste (7) ermittelte Telematikdaten von Umgebungsobjekten erfasst sind,
wobei das Blockschaltbild (5) einen Telematikdatenvergleichsblock (8) umfasst, der durch Vergleich der LDM-Objektliste (6) mit der Sensor-Objektliste (7) Differenz-Umgebungsobjekte ermittelt, die nur in der Sensor-Objektliste (7) erfasst sind und
für wenigstens eines der Differenz-Umgebungsobjekte eine Vertretungs-V2X-Nachricht (9) mit den Telematikdaten dieses Differenz-Umgebungsobjektes erstellt ,
wobei die Vertretungs-V2X-Nachricht (9) von der Zielhardware (2) über den Funkadapter (3) versendet wird.

2. Computerimplementiertes Verfahren (1) nach Anspruch 1,
**dadurch gekennzeichnet, dass** die Vertretungs-V2X-Nachricht (9) mit den Daten des Differenz-Umgebungsobjekts zusammengestellt wird, sodass sie den Empfängern so erscheint als sei sie vom Differenz-Umgebungsobjekt selbst gesendet worden.

3. Computerimplementiertes Verfahren (1) nach Anspruch 1 oder 2,
**dadurch gekennzeichnet, dass** das Blockschaltbild (5) einen Vertretungsnachrichtenblock (11) umfasst, der die Vertretungs-V2X-Nachricht (9) erstellt, wobei die Vertretungs-V2X-Nachricht (9) zumindest die Telematikdaten des Differenz-Umgebungsobjektes enthält.

4. Computerimplementiertes Verfahren (1) nach einem der vorhergehenden Ansprüche, **dadurch gekennzeichnet, dass** die Zielhardware (2) an wenigstens einen Sensor (12) angeschlossen ist.

5. Computerimplementiertes Verfahren (1) nach einem der vorhergehenden Ansprüche, **dadurch gekennzeichnet, dass** die Telematikdaten mittels wenigstens eines Radar-, Lidar-, Ultraschall- und/oder Video-Sensors (12) ermittelt und von dem V2X-Programm (10) in die Sensor-Objektliste (7) eingetragen werden.

6. Computerimplementiertes Verfahren (1) nach einem der vorhergehenden Ansprüche, **dadurch gekennzeichnet, dass** das Blockschaltbild (5) einen Datenfusionsblock (14) umfasst, der Telematikdaten verschiedener Sensoren (12, 13) miteinander vergleicht, und dass nur konsistente Telematikdaten von dem V2X-Programm (10) in die Sensor-Objektliste (7) eingetragen werden.

7. Computerimplementiertes Verfahren (1) nach einem der vorhergehenden Ansprüche, **dadurch gekennzeichnet, dass** V2X-Nachrichten mit Telematikdaten anderer Verkehrsteilnehmer über einen Funkempfänger empfangen werden, insbesondere aus Cooperative Awareness Messages (CAM), die Telematikdaten an das V2X-Programm übergeben werden und von dem V2X-Programm in die LDM-Objektliste (6) eingetragen werden.

8. Computerimplementiertes Verfahren (1) nach einem der vorhergehenden Ansprüche, **dadurch gekennzeichnet, dass** die Telematikdaten der Umgebungsobjekten in der LDM-Objektliste (6) als absolute Telematikdaten gespeichert sind.

9. Computerimplementiertes Verfahren (1) nach einem der vorhergehenden Ansprüche, **dadurch gekennzeichnet, dass** die Telematikdaten der Umgebungsobjekte in der Sensor-Objektliste (7) als relative Telematikdaten relativ zu Eigenbewegungsdaten des Sensors (12, 13) gespeichert sind und aus den relativen Telematikdaten der Umgebungsobjekte in der Sensor-Objektliste (7) und den Eigenbewegungsdaten des Sensors absolute Telematikdaten der Umgebungsobjekte bestimmt werden.

10. Computerimplementiertes Verfahren (1) nach einem der vorhergehenden Ansprüche, **dadurch gekennzeichnet, dass** die Eigenbewegungsdaten des Sensors zumindest zum Teil über ein Globales Navigationssatellitensystem bestimmt werden.

11. Computerimplementiertes Verfahren (1) nach einem der vorhergehenden Ansprüche, **dadurch gekennzeichnet, dass** die Vertretungs-V2X-Nachricht (9) als eine Cooperative Awareness Message (CAM) erstellt wird.

12. Computerimplementiertes Verfahren (1) nach einem der vorhergehenden Ansprüche, **dadurch gekennzeichnet, dass** die Zielhardware (2) in einem Fahrzeug untergebracht ist.

13. Computerimplementiertes Verfahren (1) nach einem der Ansprüche 1 bis 9, **dadurch gekennzeichnet, dass** die Zielhardware (2) in stationärer Verkehrsinfrastruktur untergebracht ist.

## Claims

1. A computer-implemented method (1) for implementing a V2X application on a target hardware (2) having a radio adapter (3), the V2X application being modeled in the form of a block diagram (5) by means of a graphic modeling environment (4),
V2X technology being understood to mean communication between a vehicle and the environment thereof,
the block diagram (5) comprising an LDM object list (6) in which received telematic data of environmental objects is captured,
the LDM object list (6) representing a local dynamic map, the block diagram (5) being translated into a V2X program (10) for executing on the target hardware (2) and the V2X program (10) being transferred to the target hardware (2) and executed there,
**characterized in that**
determined telematic data of environmental objects is captured in a sensor-object list (7),
wherein the block diagram (5) comprises a telematic data comparison block (8) for determining differential environmental objects captured only in the sensor object list (7) by comparing the LDM object list (6) to the sensor object list (7), and
creating a representative V2X message (9) having the telematic data of said differential environmental object for at least one of the differential environmental objects,
wherein the representative V2X message (9) is sent by the target hardware (2) by means of the radio adapter (3) .

2. The computer-implemented method (1) according to claim 1, **characterized in that** the representative V2X message (9) is compiled having the data of the differential environmental object, so that said message appears to the recipients as if said message were sent from the differential environmental object itself.

3. The computer-implemented method (1) according to claim 1 or 2, **characterized in that** the block diagram (5) comprises a representative message block (11) for creating the representative V2X message (9), wherein the representative V2X message (9) comprises at least the telematic data of the differential environmental obj ect.

4. The computer-implemented method (1) according to any one of the preceding claims, **characterized in that** the target hardware (2) is connected to at least one sensor (12) .

5. The computer-implemented method (1) according to any one of the preceding claims, **characterized in that** the telematic data is determined by means of at least one radar, lidar, ultrasonic, and/or video sensor (12) and entered in the sensor object list (7) by the V2X program (10).

6. The computer-implemented method (1) according to any one of the preceding claims, **characterized in that** the block diagram (5) comprises a data fusion block (14) for comparing telematic data of different sensors (12, 13) to each other, and that only consistent telematic data is entered in the sensor object list (7) by the V2X program (10).

7. The computer-implemented method (1) according to any one of the preceding claims, **characterized in that** V2X messages having telematic data of other traffic participants are received by means of a radio receiver, particularly from Cooperative Awareness Messages (CAM), and the telematic data is transferred to the V2X program and is entered in the LDM object list (6) by the V2X program.

8. The computer-implemented method (1) according to any one of the preceding claims, **characterized in that** the telematic data of the environmental objects is saved as absolute telematic data in the LDM object list (6).

9. The computer-implemented method (1) according to any one of the preceding claims, **characterized in that** the telematic data of the environmental objects is saved in the sensor object list (7) as relative telematic data relative to the intrinsic motion data of the sensor (12, 13) and absolute telematic data of the environmental objects is determined from the relative telematic data of the environmental objects in the sensor object list (7) and the intrinsic motion data of the sensor.

10. The computer-implemented method (1) according to any one of the preceding claims, **characterized in that** the intrinsic motion data of the sensor is determined at least partially by means of a global navigation satellite system.

11. The computer-implemented method (1) according to any one of the preceding claims, **characterized in that** the representative V2X message (9) is created as a Cooperative Awareness Message (CAM).

12. The computer-implemented method (1) according to any one of the preceding claims, **characterized in that** the target hardware (2) is accommodated in a vehicle.

13. The computer-implemented method (1) according to any one of the claims 1 through 9, **characterized in that** the target hardware (2) is accommodated in stationary traffic infrastructure.

## Revendications

1. Procédé (1) mis en œuvre sur ordinateur pour mettre en application une application V2X sur un matériel cible (2) avec un adaptateur radio (3), dans lequel l'application V2X est modélisée avec un environnement de modélisation (4) graphique sous la forme d'un schéma fonctionnel (5),
dans lequel la technologie V2X signifie la communication d'un véhicule avec son environnement,
dans lequel le schéma fonctionnel (5) comprend une liste d'objets LDM (6) (Carte Locale Dynamique) dans laquelle sont enregistrées des données télématiques reçues depuis des objets environnants,
dans lequel la liste d'objets LDM (6) représente une carte locale dynamique, dans lequel le schéma fonctionnel (5) est traduit en un programme V2X (10) exécutable sur le matériel cible (2) et le programme V2X (10) est transféré sur le matériel cible (2) et y est exécuté,
**caractérisé en ce que**
des données télématiques d'objets environnants déterminées sont enregistrées dans une liste (7) d'objets du capteur,
dans lequel le schéma fonctionnel (5) comprend un bloc de comparaison (8) de données télématiques qui, par comparaison de la liste d'objets LDM (6) avec la liste (7) d'objets du capteur, détermine des objets d'environnement différentiels qui ne sont enregistrés que dans la liste (7) d'objets du capteur et
un message V2X de substitution (9) est créé pour au moins l'un des objets d'environnement différentiels avec les données télématiques de cet objet d'environnement différentiels,
dans lequel le message V2X de substitution (9) est envoyé du matériel cible (2) via l'adaptateur radio (3).

2. Procédé (1) mis en œuvre sur ordinateur selon la revendication 1, **caractérisé en ce que** le message V2X de substitution (9) est compilé avec les données de l'objet d'environnement différentiel de manière à qu'il apparaisse aux destinataires comme s'il avait été envoyé par l'objet d'environnement différentiel lui-même.

3. Procédé (1) mis en œuvre sur ordinateur selon la revendication 1 ou 2, **caractérisé en ce que** le schéma fonctionnel (5) comprend un bloc de messages de substitution (11) qui crée le message V2X de substitution (9), dans lequel le message V2X de substitution (9) contient au moins les données télématiques de l'objet d'environnement différentiel.

4. Procédé mis en œuvre sur ordinateur (1) selon l'une quelconque des revendications précédentes, **caractérisé en ce que** le matériel cible (2) est raccordé à au moins un capteur (12).

5. Procédé mis en œuvre sur ordinateur (1) selon l'une quelconque des revendications précédentes, **caractérisé en ce que** les données télématiques sont déterminées au moyen d'au moins un capteur (12) radar, lidar, à ultrasons et/ou vidéo et sont inscrites par le programme V2X (10) dans la liste (7) d'objets du capteur.

6. Procédé mis en œuvre sur ordinateur (1) selon l'une quelconque des revendications précédentes, **caractérisé en ce que** le schéma fonctionnel (5) comprend un bloc de fusion (14) de données qui compare entre elles les données télématiques de différents capteurs (12, 13) et **en ce que** seules des données télématiques cohérentes sont inscrites dans la liste (7) d'objets du capteur par le programme V2X (10) .

7. Procédé mis en œuvre sur ordinateur (1) selon l'une quelconque des revendications précédentes, **caractérisé en ce que** des messages V2X avec des données télématiques d'autres usagers de la route sont reçus par un récepteur radio, en particulier de Coopérative Awareness Messages (CAM), les données télématiques sont transférées au programme V2X et sont inscrites par le programme V2X dans la liste d'objets LDM (6).

8. Procédé mis en œuvre sur ordinateur (1) selon l'une quelconque des revendications précédentes, **caractérisé en ce que** les données télématiques des objets environnants sont mémorisées dans la liste d'objets LDM (6) en tant que données télématiques absolues.

9. Procédé mis en œuvre sur ordinateur (1) selon l'une quelconque des revendications précédentes, **caractérisé en ce que** les données télématiques des objets environnants sont mémorisées dans la liste (7) d'objets du capteur en tant que données télématiques relatives relativement aux données de mouvement propres du capteur (12, 13), et des données télématiques absolues des objets environnants sont déterminées à partir des données télématiques relatives des objets environnants dans la liste (7) d'objets du capteur et des données de mouvement propres du capteur.

10. Procédé mis en œuvre sur ordinateur (1) selon l'une quelconque des revendications précédentes, **caractérisé en ce que** les données de mouvement propres du capteur sont déterminées au moins en partie au moyen d'un Système global de navigation par satellite.

11. Procédé mis en œuvre sur ordinateur (1) selon l'une quelconque des revendications précédentes, **caractérisé en ce que** le message V2X de substitution (9) est créé en tant qu'un Cooperative Awareness Message (CAM).

12. Procédé mis en œuvre sur ordinateur (1) selon l'une quelconque des revendications précédentes, **caractérisé en ce que** le matériel cible (2) est implanté dans un véhicule.

13. Procédé mis en œuvre sur ordinateur (1) selon l'une quelconque des revendications 1 à 9, **caractérisé en ce que** le matériel cible (2) est implanté dans une infrastructure routière stationnaire.
